# EUROPÄISCHE PATENTSCHRIFT

(11) **EP 3 152 830 B1**
(45) Veröffentlichungstag und Bekanntmachung des Hinweises auf die Patenterteilung: **09.01.2019**
(21) Anmeldenummer: 15729121.2
(22) Anmeldetag: 05.06.2015
(51) Int. Cl.: H02P 7/285, H02P 29/50, E05F 15/697, H02P 7/28

(54) **VERFAHREN ZUM BETRIEB EINES BÜRSTENBEHAFTETEN KOMMUTATORMOTORS EINES VERSTELLANTRIEBS UND VERSTELLANTRIEB**
METHOD FOR OPERATING A BRUSHED COMMUTATOR MOTOR OF AN ADJUSTING DRIVE, AND ADJUSTING DRIVE
PROCÉDÉ D'ACTIONNEMENT D'UN MOTEUR À COLLECTEUR À BALAIS D'UN ENTRAÎNEMENT DE RÉGLAGE ET ENTRAÎNEMENT DE RÉGLAGE

(30) Priorität: 06.06.2014 DE 102014008462
(43) Veröffentlichungstag der Anmeldung: 12.04.2017
(73) Patentinhaber: Brose Fahrzeugteile GmbH & Co. Kommanditgesellschaft, Bamberg, 96052 Bamberg (DE)
(72) Erfinder: SCHOLZ, Marcus, 96215 Lichtenfels (DE); ÜBELEIN, Jörg, 96271 Grub am Forst (DE); THOMANN, Christian, 96138 Burgebrach (DE); WEINGÄRTNER, Thomas, 96117 Memmelsdorf (DE)
(74) Vertreter: FDST Patentanwälte
(86) Internationale Anmeldenummer: PCT/EP2015/062533
(87) Internationale Veröffentlichungsnummer: WO 2015/185707

(56) Entgegenhaltungen:
- EP-A2- 2 704 306
- US-A- 6 144 179
- US-A1- 2011 270 558
- US-A1- 2013 043 820

## Beschreibung

Die Erfindung betrifft ein Verfahren zum Betrieb eines bürstenbehafteten Kommutatormotors eines Verstellantriebs sowie einen Verstellantrieb eines Kraftfahrzeugs mit einem derartigen Kommutatormotor. Der Verstellantrieb ist insbesondere Bestandteil eines Fensterhebers.

Kraftfahrzeuge umfassen üblicherweise Verstellteile, beispielsweise Seitenfenster und/oder ein Schiebedach, welche mittels eines elektromotorischen Verstellantriebs geöffnet und geschlossen werden können. Auch weisen Sitze oder zumindest Teile hiervon, eine elektromotorische Sitzverstellung auf. Das jeweilige Verstellteil wird mittels eines von einem Elektromotor angetriebenen Getriebes in Form insbesondere eines Schneckengetriebes mit einer (antriebsseitigen) Schnecke auf der Motorwelle und mit einem (abtriebsseitigen) Schneckenrad bewegt. Herkömmlicherweise ist das Getriebe in einem Getriebegehäuse angeordnet, an welches der Elektromotor über dessen Motorgehäuse (Poltopf) angeflanscht ist. Üblicherweise wird der Elektromotor an dessen Stirnseite am Getriebegehäuse befestigt, wobei ein Wellenzapfen, d. h. das den antriebsseitigen Getriebeteil (wellenendseitige Schnecke) tragende Wellenende der Motorwelle des Elektromotors in das Getriebegehäuses hineinragt.

Als Elektromotor wird üblicherweise ein bürstenbehafteter Elektromotor verwendet. Derartige Elektromotoren weisen einen Kommutator mit Lamellen sowie zumindest zwei Bürsten auf, mittels derer eine Kommutierung und folglich eine elektrische Umpolung von Spulen eines Rotors des Elektromotors erfolgt. Hierbei sind die aus gepresstem Kohlestaub hergestellten Bürsten um den zentralen Kommutator angeordnet und liegen in korrespondierenden Köchern ein. Mittels an den Bürsten und an den Köchern befestigten Blattfedern werden die Bürsten gegen den Kommutator gepresst. Folglich sind die Bürsten mit dem Kommutator in elektrischem Kontakt und bestreichen dessen Kommutatorlamellen während des Motorbetriebs.

Beim Übergang der elektrischen Kontaktierung der Bürsten zu der in Drehrichtung jeweils nachfolgenden Kommutatorlamelle steigt der elektrische Widerstand des Elektromotors an. Infolgedessen sinkt zu diesem Zeitpunkt der durch den Elektromotor fließende elektrische Strom (Motorstrom). Dies dauert an, bis die Bürsten aufgrund der Drehung des Kommutators erneut lediglich mit einer einzigen der Kommutatorlamellen elektrisch kontaktiert sind. Während dieser Zeitspanne sinken das Drehmoment des Elektromotors und somit auch die Drehzahl des Elektromotors, zumindest bei einer vergleichsweise schweren zu bewegenden Verstellteil und einer vergleichsweise geringen Trägheit des Rotors. Dies führt zu einem negativen akustischen Eindruck sowie einer vergleichsweise starken Beanspruchung und Belastung der Bestandteile des Verstellantriebs.

Aus EP 2 704 306 A2 ist eine Vorrichtung und ein Verfahren zur Reduzierung von Drehmonetrippeln bekannt. Hierbei wird ein Wechselstrom, der zur Bestromung eines Stators herangezogen wird, angepasst.

In US 2013/0043820 A1 ist ein Verfahren zur Verarbeitung mindestens einer Motorgröße eines von einer Bordnetzgleichspannung versorgten, mechanisch kommutierten Gleichstrommotors einer Stelleinrichtung für ein Kraftfahrzeug offenbart. Der Ankerstrom sowie die Motorspannung des Gleichstrommotors werden erfasst, und aus dem zeitlichen Verlauf des Ankerstroms wird die Stellposition eines Stellelementes ermittelt.

US 2011/0270558 A1 zeigt ein Verfahren zur Verarbeitung eines Motorsignals eines Gleichstrommotors. Es werden der Ankerstrom und die Motorspannung des Gleichstrommotors erfasst und zur Ermittlung der Gegeninduktionsspannung des Gleichstrommotors herangezogen. Anhand der ermittelten Gegeninduktionsspannung wird aus dem Ankerstromsignal ein Nutzsignal zur Positionserfassung und/oder zur Bewertung einer Überschusskraftbegrenzung erzeugt.

US 6,144,179 A zeigt ein Verfahren zum Ermitteln der Drehzahl bei mechanisch kommutierten Gleichstrommotoren.

Der Erfindung liegt die Aufgabe zugrunde, ein besonders geeignetes Verfahren zum Betrieb eines bürstenbehafteten Kommutatormotors eines Verstellantriebs eines Kraftfahrzeugs sowie einen besonders geeigneten Verstellantrieb anzugeben, wobei insbesondere der akustische Eindruck verbessert ist.

Hinsichtlich des Verfahrens wird diese Aufgabe durch die Merkmale des Anspruchs 1 und hinsichtlich des Verstellantriebs durch die Merkmale des Anspruchs 6 erfindungsgemäß gelöst. Vorteilhafte Weiterbildungen und Ausgestaltungen sind Gegenstand der Unteransprüche.

Das Verfahren dient dem Betrieb eines Elektromotors eines Verstellantriebs eines Kraftfahrzeugs. Der Verstellantrieb ist insbesondere Bestandteil eines Fensterhebers, eines Schiebedachs oder einer elektrischen Tür- oder Kofferraum-Zuziehhilfe. Mittels des Verstellantriebs wird hierbei ein Verstellteil entlang eines Verstellwegs verbracht. Der Elektromotor weist einen Kommutator sowie Bürsten auf, die bei Betrieb über Kommutatorlamellen des Kommutators streichen. Mit anderen Worten handelt es sich bei dem Elektromotor um einen bürstenbehafteten Kommutatormotor. Die Bürsten sind Bestandteil eines Bürstensystems eines Stators, und der Kommutator ist Bestandteil eines Rotors des Elektromotors. Der Rotor ist insbesondere innerhalb des Stators angeordnet. Mit anderen Worten ist der Elektromotor als Innenläufer ausgestaltet. Der Stator umfasst zumindest einen Permanentmagneten, der beispielsweise aus einem Ferrit erstellt ist.

Zum Betrieb werden zunächst vorzugsweise die beiden Bürsten bestromt, wobei hierfür zweckmäßigerweise Gleichstrom verwendet wird. Mit anderen Worten ist der Elektromotor ein Gleichstrommotor. In einem ersten Arbeitsschritt wird eine Winkelposition des Rotors bezüglich des Stators bestimmt. Hierbei liegt der Winkel geeigneterweise zwischen 0° und 360°. Mit anderen Worten wird nicht die Anzahl der Umdrehungen erfasst, sondern vielmehr jeweils der Bruchteil einer Vollumdrehung. Eine Winkelposition von 0° wird beispielsweise bei der Fertigung des Kommutatormotors festgelegt und ist über den Lebenszyklus des Kommutatormotors konstant. Beispielsweise ist in diesem Fall eine der Bürsten mit einer bestimmten Lamelle des Kommutators in direktem mechanischem und/oder elektrischem Kontakt. Ausgehend von der Winkelposition wird ein zu erwartender Rippel des mittels des Kommutatormotors gelieferten Drehmoments bestimmt. Insbesondere wird hierzu ein zu erwartender Drehmomentverlauf bestimmt und innerhalb des zu erwartenden Drehmomentverlaufs der zu erwartender Rippel. Unter Rippel wird hierbei insbesondere eine Oberschwindung innerhalb des Drehmomentverlaufs verstanden, dessen Frequenz ein ganzzahliges Vielfaches der Frequenz ist, mit der der Rotor bezüglich des Stators rotiert. Hierbei sinkt insbesondere das Drehmoment im Vergleich zu einem gewünschten Drehmoment ab. Der Rippel entsteht aufgrund der Kommutierung, also wenn eine der Bürsten mit zweien der Kommutatorlamellen in elektrischem Kontakt ist. Zusammenfassend ist der Rippel insbesondere eine Abweichung von dem gewünschten Drehmoment, wobei die Abweichung durch die Konstruktion des Elektromotors selbst hervorgerufen wird. Das gewünschte Drehmoment ist zweckmäßigerweise konstant.

Der Winkel des Rotors bezüglich des Stators, bei dem die Kommutierung stattfindet, und unter dem der Rippel innerhalb des Drehmoments auftritt, ist aufgrund der Konstruktion des Elektromotors und insbesondere des Kommutators sowie der Bürsten bekannt. Unter Zuhilfenahme der zuvor bestimmten Winkelposition, die der Rotor bezüglich des Stators zum aktuellen Zeitpunkt einnimmt, ist folglich bekannt, zu welchem zukünftigen Zeitpunkt der Rippel innerhalb des Drehmoments zu erwarten ist. Dieser ist der Zeitpunkt der Bestimmung der Winkelposition zuzüglich des Quotienten aus der Winkeldifferenz zwischen dem Winkel der Kommutierung und der aktuellen Winkelposition geteilt durch die Drehzahl, mit der der Rotor bezüglich des Stators rotiert. Folglich wird anhand der Winkelposition insbesondere der Zeitpunkt bestimmt, zu dem der Rippel innerhalb des Drehmoments zu erwarten ist. In einem weiteren Arbeitsschritt wird der Motorstrom, also der elektrische Strom, mittels dessen die Bürsten des Elektromotors bestromt werden, derart angepasst, dass die Amplitude des zu erwartenden Rippels unterhalb eines bestimmten Grenzwerts verbleibt. Insbesondere ist der Grenzwert gleich null oder ein bestimmter Prozentsatz des mittleren Drehmoments des Elektromotors, das aktuell eingestellt ist. Beispielsweise ist der Grenzwert proportional zu dem Motorstrom. Zum Beispiel ist der Prozentsatz kleiner oder gleich 10%, 2% oder 1%. Insbesondere wird der Zeitpunkt bestimmt, zu dem der Rippel erwartet wird und im Wesentlichen zu diesem Zeitpunkt der Motorstrom angepasst. Alternativ erfolgt eine Anpassung bereits einen bestimmen Zeitabschnitt früher, was eine Trägheit des Elektromotors und dessen Ansteuerung berücksichtigt. Zweckmäßigerweise ist die Dauer der Anpassung vergleichsweise kurz. Insbesondere ist die Dauer der Anpassung ein Bruchteil der Zeitspanne einer Umdrehung des Rotors und vorzugsweise kleiner als 10%, 5% oder 2% hiervon.

Aufgrund der Anpassung des Motorstroms wird der zu erwartende Rippel vollständig aus dem Drehmomentverlauf entfernt oder zumindest reduziert. Vorzugsweise ist der Drehmomentverlauf somit im Wesentlichen konstant. Der Motorstrom wird insbesondere erhöht, so dass ein Drehmomenteinbruch aufgrund eines erhöhten elektrischen Widerstands und folglich des verminderten Stromflusses kompensiert wird. Zweckmäßigerweise wird die elektrische Spannung, die zwischen den beiden Bürsten anliegt, zu diesem Zeitpunkt für einen vergleichsweise geringen Zeitabschnitt erhöht.

Aufgrund der Verringerung der Amplitude des Rippels wird der Drehmomentverlauf des Kommutatormotors geglättet, was die innerhalb des Verstellantriebs auf tretenden Kräfte reduziert und somit die Lebensdauer der Bauteile des Verstellantriebs erhöht. Zudem wird hierbei der Drehzahlverlauf ebenfalls geglättet, so dass der Rotor im Wesentlichen lediglich eine einzige Frequenz aufweist, mit der dieser bezüglich des Stators rotiert. Infolgedessen ist der akustische Eindruck eines im Wesentlichen gleich laufenden Elektromotors, was dessen Eindruck verbessert.

Zweckmäßigerweise wird anhand der bestimmten Winkelposition auch zumindest ein weiterer zu erwartender Rippel innerhalb des Drehmomentverlaufs bestimmt, der beispielsweise bezüglich des bereits bestimmten zu erwartenden Rippels um 360° verschoben ist. Mit anderen Worten wird erwartet, dass der zweite Rippel nach einer Vollumdrehung des Rotors bezüglich des Stators auftritt bzw. auftreten würde. Geeigneterweise wird auch bei diesem zu erwartenden Rippel der Motorstrom angepasst, um ein Auftreten zu verhindern oder zumindest dessen Amplitude abzuschwächen. Zweckmäßigerweise wird hierbei der Motorstrom periodisch angesteuert, wobei die Periode der Periode entspricht, mit der der Rotor bezüglich eines Stators rotiert. Geeigneterweise erfolgt die Ansteuerung des Motorstroms mit einer Frequenz, die einem ganzzahligen Vielfachen der Rotorfrequenz entspricht. Das Vielfache ist hierbei geeigneterweise die Anzahl der Lamellen des Kommutators. Hierbei sind die Kommutatorlamellen zweckmäßigerweise gleichartig aufgebaut und weisen insbesondere die gleiche Kreisbogenlänge auf.

Zusammenfassend werden nach Bestimmung der Winkelposition für einen bestimmten Zeitabschnitt im Wesentlichen sämtliche zu erwartende Rippel innerhalb des Drehmoments bestimmt und der Motorstrom derart angepasst, dass die Amplitude jedes der zu erwartenden Rippel unterhalb des Grenzwerts verbleibt. Insbesondere wird hierzu die Drehzahl des Rotors bestimmt, wobei dies beispielsweise mittels Bestimmung der Winkelposition ermittelt wird. Geeigneterweise wird vor Bestimmung der Winkelposition der Winkel ein weiteres Mal bestimmt sowie die zwischen den beiden Zeitpunkten der Winkelbestimmung verstrichene Zeit erfasst. Mit anderen Worten wird zweimal die Winkelposition sowie die dazwischen liegende Zeitspanne bestimmt und in diesem in ein Verhältnis zur Bestimmung der Drehzahl gesetzt. Alternativ wird die Drehzahl des Rotors mittels eines Sensors bestimmt, der beispielsweise die Drehzahl eines weiteren Elements des Verstellantriebs erfasst, wie z.B. eines Getrieberads. Auf diese Weise sind keine weiteren Sensoren erforderlich, was zu reduzierten Herstellungskosten des Verstellantriebs führt.

Ein Sensorsignal wird zur Bestimmung der Winkelposition verwendet. Das Sensorsignal wird mittels eines Positionssensors generiert, der bei Betrieb die Winkelstellung des Rotors bezüglich des Stators ermittelt. Da die Rippel innerhalb des Drehmomentverlaufs an diskreten Positionen (Winkel) des Rotors bezüglich des Stators auftreten, ist somit die Bestimmung des zu erwartenden Rippels vergleichsweise exakt. Zudem ist ein Rechenaufwand reduziert und der Einfluss von Fehlern aufgrund beispielsweise fehlerhafter Modelle oder fehlerhafter Berechnungsvorschriften reduziert. Der Zeitpunkt des zu erwartenden Rippels wird mittels eines Referenzwerts bestimmt.

Der Quotient aus dem Referenzwert und der Drehzahl des Rotors bezeichnet die Zeitspanne, die nach dem Sensorsignal bis zum Auftreten des Rippels bzw. des zu erwartenden Rippels verstreicht. Insbesondere wird hierzu als Referenzwert ein zu dem Kreisbogen einer Lamelle des Kommutators korrespondierender Winkel herangezogen.

Beispielsweise wird als Positionssensor ein eine Lichtschranke oder eine Lichtschranke und ein Geberrad aufweisender Sensor verwendet. Besonders bevorzugt jedoch arbeitet der Positionssensor basierend auf dem magnetoresistiven Effekt. Beispielsweise umfasst der Positionssensor einen Hall-Sensor oder einen AMR-Sensor, der eine vergleichsweise hohe Winkelauflösung aufweist. Insbesondere umfasst der Positionssensor einen Ringmagneten, der vorzugsweise an dem Rotor angebunden ist. Hierbei ist zweckmäßigerweise der Hall- bzw. AMR-Sensor ortsfest, was ein Auslesen der Daten sowie eine Bestromung vereinfacht.

Vorzugsweise ist der Referenzwert in einem nicht flüchtigen Speicher der Motorelektronik hinterlegt und wird bei der Bestimmung des Zeitpunkts des zu erwartenden Rippels aus dieser ausgelesen. Beispielsweise wird der Elektromotor nach dessen Fertigstellung kalibriert und anhand eines Teststands der Referenzwert ermittelt. Alternativ wird der Referenzwert anhand der Konstruktion des Elektromotors berechnet. Mittels Auslesen des Referenzwerts aus dem nicht flüchtigen Speicher der Motorelektronik steht der Referenzwert im Wesentlichen unverzüglich zur Verfügung und eine Anpassung des Motorstroms kann nach Erfassen des ersten Sensorsignals des Positionssensors erfolgen.

Alternativ hierzu wird der Referenzwert eines im Motorstrom vorhandenen Stromrippels bestimmt, der vor Anpassung des Motorstroms erfasst wurde. Vorzugsweise wird eine Anzahl von Stromrippeln zur Bestimmung des Referenzwerts verwendet. Der Referenzwert wird bestimmt, indem der Zeitpunkt zwischen dem Auftreten des Stromrippels und dem hierauf erfolgenden Rippel im Drehmomentverlauf mit der Drehzahl des Elektromotors multipliziert wird. Dies erfolgt zweckmäßigerweise, wenn die Drehzahl des Elektromotors im Wesentlichen konstant ist. Beispielsweise erfolgt nach Beginn der Bestromung des Elektromotors die Bestimmung des Referenzwerts innerhalb einer ersten Umdrehung des Elektromotors. Auf diese Weise ist vergleichsweise schnell der Referenzwert bekannt, und der zu erwartende Rippel innerhalb des Drehmoments ist vergleichsweise schnell bestimmbar. Zweckmäßigerweise wird der Referenzwert stets nach Beginn der Bestromung des Elektromotors erneut bestimmt. Auf diese Weise werden Effekte berücksichtigt, die zu einer Verschiebung der Sensorsignale bezüglich des Zeitpunkts des zu erwartenden Rippels führen. Derartige Effekte sind beispielsweise eine Verschiebung von Bestandteilen des Positionssensors oder eine etwaige Abnutzung der Bürsten.

Der Verstellantrieb eines Kraftfahrzeugs weist einen bürstenbehafteten Kommutatormotor auf. Zweckmäßigerweise ist der Verstellantrieb ein Fensterheber, eine Sitzverstellung, eine elektrisch betätigte Heckklappe oder dergleichen. Der Elektromotor selbst weist einen Rotor und einen Stator auf. Beispielsweise ist der Rotor innerhalb des Stators angeordnet. Mit anderen Worten ist der Elektromotor als Innenläufer ausgestaltet. Alternativ hierzu ist der Elektromotor ein Außenläufer. Der Stator umfasst eine Anzahl von Bürsten, und der Rotor umfasst einen Kommutator mit einer Anzahl von Kommutatorlamellen. Zweckmäßigerweise sind die Bürsten Bestandteil eines Bürstensystems und aus gepresstem Kohlestaub erstellt.

Bei Betrieb des Verstellantriebs wird in einem ersten Arbeitsschritt die Winkelposition eines Rotors des Elektromotors bezüglich eines Stators des Elektromotors bestimmt. In einem weiteren Arbeitsschritt wird anhand der Winkelposition ein aufgrund der Kommutierung zu erwartender Rippel innerhalb des Drehmoments bestimmt. Insbesondere wird der Zeitpunkt des zu erwartenden Rippels ermittelt. In einem weiteren Arbeitsschritt wird der Motorstrom, also der Strom, mittels dessen der Elektromotor betrieben ist, derart angepasst, dass die Amplitude des zu erwartenden Rippels unterhalb eines bestimmten Grenzwerts verbleibt. Mit anderen Worten ist die Abweichung zum Zeitpunkt des Rippels bezüglich eines vorgegebenen Drehmoments geringer als der bestimmte Grenzwert. Vorzugsweise weist der Elektromotor eine Motorsteuerung auf, mittels derer eine Einstellung des Motorstroms ermöglicht ist. Zweckmäßigerweise wird hierfür die Elektronik herangezogen, mittels derer eine Drehzahl oder das Drehmoment des Elektromotors für dessen ordnungsgemäßen Betrieb vorgegeben wird.

Beispielsweise umfasst der Elektromotor einen Stromsensor oder einen Positionssensor, der beispielsweise einen Hall-Sensor oder einen AMR-Sensor aufweist. Insbesondere ist in diesem Fall ein Ringmagnet an dem Rotor angebunden und drehfest an diesem befestigt. Der Stator des Kommutatormotors umfasst geeigneterweise eine Anzahl von Permanentmagneten, die rotationssymmetrisch bezüglich der Drehachse des Rotors angeordnet sind. Beispielsweise sind die Permanentmagneten aus Eisen oder NdFeB erstellt.

Nachfolgend werden Ausführungsbeispiele der Erfindung anhand einer Zeichnung näher erläutert. Darin zeigen:
- Fig. 1: schematisch einen Fensterheber mit einem Kommutatormotor,
- Fig. 2: ausschnittsweise perspektivisch den Kommutatormotor,
- Fig. 3: schematisch ein erstes Verfahren zum Betrieb des Fensterhebers,
- Fig. 4: schematisch ein zweites Verfahren zum Betrieb des Fensterhebers, und
- Fig. 5a - c: zeitliche Drehzahl-, Motorstrom- und Sensorsignalverläufe.

Einander entsprechende Teile sind in allen Figuren mir den gleichen Bezugszeichen versehen.

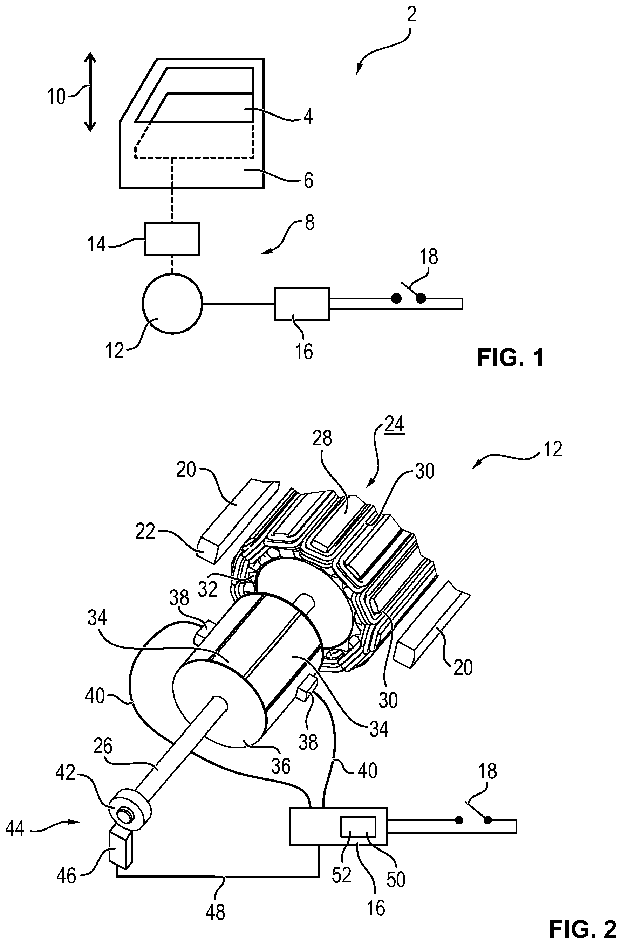

In Fig. 1 ist schematisch ein elektrischer Fensterheber 2 mit einer Fensterscheibe 4 dargestellt, wobei der Fensterheber 2 in einer Tür 6 eines Kraftfahrzeugs integriert ist. Die Fensterscheibe 4 wird mittels eines Verstellantriebs 8 entlang eines Verstellweges 10 verbracht. Der Verstellantrieb 8 umfasst einen Elektromotor 12, dem wellenseitig ein Schneckengetriebe 14 zugeordnet ist, mittels dessen die Rotationsbewegung des Elektromotors 12 in eine Translationsbewegung der Fensterscheibe 4 umwandelt wird. Der Elektromotor 12 wird von einer Motorelektronik 16 mit elektrischer Energie versorgt, sobald ein Insasse des Kraftfahrzeugs eine Verstellbewegung der Fensterscheibe 4 entlang des Verstellwegs 10 mittels Betätigung eines Tasters 18 startet. Innerhalb der Motorelektronik 16, auch als Steuerelektronik bezeichnet, ist unter anderem ein Einklemmschutz integriert, der ein Einklemmen eines Objekts durch die Fensterscheibe 4 verhindert, das sich innerhalb des Verstellwegs 10 befindet.

In Fig. 2 ist perspektivisch ausschnittsweise der Elektromotor 12 dargestellt, der als Innenläufer ausgeführt ist. Der Elektromotor 12 umfasst eine Anzahl von Permanentmagneten 20, von denen zwei gezeigt sind. Die Permanentmagneten 20 sind Bestandteil eines Stators 22 des Elektromotors 12 und werden mittels eines nicht gezeigten Blechpakets in Position gehalten. Innerhalb des Stators 22 ist ein Rotor 24 mit einer Rotorwelle 26 angeordnet, an der ein nicht gezeigtes Schneckenrad des Schneckengetriebes 14 befestigt ist. Der Rotor 24 umfasst eine Elektromagnetenstruktur 28 mit einer Anzahl von die jeweiligen Elektromagneten bildenden Spulen 30. Jede der Spulen 30 ist um ein auf der Welle 26 befestigtes Blechpaket 32 gewickelt und mit zwei Kommutatorlamellen 34 eines Kommutators 36 elektrisch kontaktiert, der seinerseits drehfest an der Rotorwelle 26 angebunden ist. Die Kommutatorlamellen 34 unterscheiden sich lediglich aufgrund deren Anordnung bezüglich der Rotorwelle 26, wobei die Kommutatorlamellen 34 jeweils um einen konstanten Winkel zueinander versetzt sind.

Mit dem Kommutator 36 sind zwei Bürsten 38 elektrisch kontaktiert, die bei Betrieb des Elektromotors 12 über die Kommutatorlamellen 34 streichen. Hierbei ist jede der Bürsten 38 mittels einer Litze 40 mit der Motorelektronik 16 elektrisch kontaktiert. An dem dem Blechpaket 32 gegenüberliegenden Freiende der Rotorwelle 26 ist ein Ringmagnet 42 eines Positionssensors 44 drehfest angebunden. Der Positionssensor 44 umfasst einen AMR-Sensor 46, der mittels einer Leitung 48 mit der Motorelektronik signaltechnisch gekoppelt ist. In einer hier nicht dargestellten alternativen Ausführungsform ist der AMR-Sensor durch einen Hall-Sensor ersetzt. Die Motorelektronik 16 umfasst einen nicht flüchtigen Speicher 50, innerhalb dessen bei Fertigung des Verstellantriebs 8 ein Referenzwert 52 hinterlegt wird.

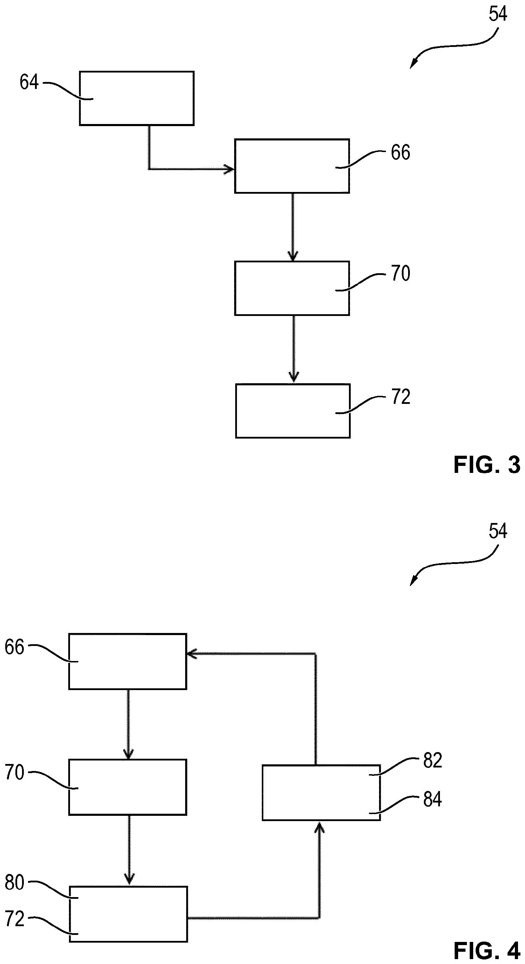

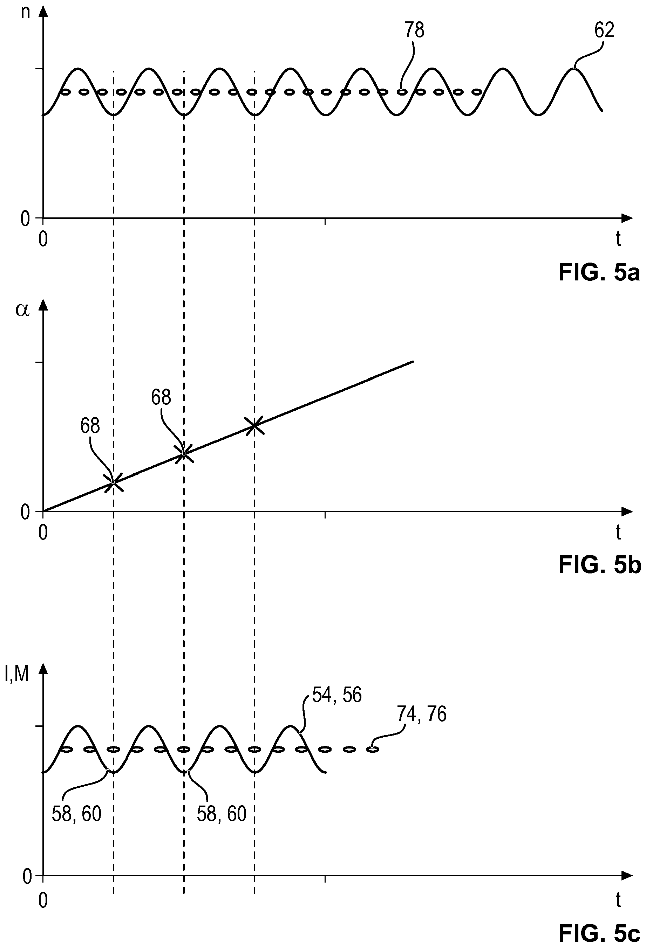

Die Motorelektronik 16 ist vorgesehen, ein in Fig. 3 schematisch dargestelltes Verfahren 54 zum Betrieb des Kommutatormotors 12 durchzuführen. Hierbei wird ein Motorstrom I angepasst, der mittels der Motorelektronik 16 über die Litzen 40 der Elektromagnetenstruktur 28 bereitgestellt wird. In Fig. 5c ist ein erster Motorstromverlauf 54 über die Zeit t dargestellt, deren sich nach Betätigen des Tasters 18 ergibt, wenn eine Anpassung gemäß dem Verfahren 54 nicht erfolgt. Der Motorstrom I ist hierbei direkt proportional zu dem Drehmoment M, mittels dessen die Fensterscheibe 4 entlang des Verstellwegs 10 verbracht wird. Infolgedessen entspricht der erste Motorstromverlauf 54 einem ersten Drehmomentverlauf 56, wobei die Skalierung unterschiedlich ist.

Bei Rotation des Rotors 24 bezüglich des Stators 22 streichen die Bürsten 38 entlang der Kommutatorlamellen 34. Sobald die beiden Bürsten 38 jeweils mit zweien der Kommutatorlamellen 34 elektrisch kontaktiert sind, werden zwei der Spule 30 der Elektromagnetenstruktur 28 bestromt, die zueinander parallel geschalten sind. Infolgedessen steigt der ohmsche Widerstand des Elektromotors 12, was zu einem Einbruch des Motorstroms I und folglich auch des Motordrehmoments M führt. Folglich weist der erste Motorstromverlauf 54 und der erste Drehmomentverlauf 56 eine Anzahl von Stromrippel 58 bzw. Rippel 60 des Drehmoments M auf. Sobald die Bürsten 38 jeweils nur mit einer der Kommutatorlamellen 34 elektrisch kontaktiert sind, erfolgt aufgrund der Induktivität 30 ein Überschwingen, so dass innerhalb der Verläufe 54,56 eine Schwingung gebildet ist, deren Frequenz gleich der Drehzahl n des Elektromotors 12 multipliziert mit der Anzahl der Lamellen 34 ist.

Aufgrund der vergleichsweise konstanten Last, nämlich der Fensterscheibe 4 und dem im Wesentlichen konstanten Reibkoeffizienten entlang des Verstellwegs 10 weist der Elektromotor 12 in diesem Fall einen in Fig. 5a gezeigten ersten Drehzahlverlauf 62 auf, der im Wesentlichen dem ersten Motorstromverlauf 54 bzw. dem ersten Drehmomentverlauf 56 entspricht. Mit anderen Worten ist die Drehzahl n zum Zeitpunkt der jeweiligen Rippel 58,60 abgesenkt und der erste Drehzahlverlauf 62 weist eine Schwingung auf. Infolgedessen ist der akustische Eindruck des Elektromotors 12 verschlechtert und die Fensterscheibe 4 wird nicht mit konstanter Geschwindigkeit entlang des Verstellwegs verbracht. Folglich wird das Schneckengetriebe 14 aufgrund der auftretenden Kräfte, die wegen der wechselnden Beschleunigung entstehen, vergleichsweise stark belastet.

Zur Verhinderung derartiger Drehmomentschwankungen wird das Verfahren 54 gemäß Fig. 3 durchgeführt. In einem ersten Arbeitsschritt 64 wird der Referenzwert 52 aus dem Speicher 50 ausgelesen. Der Referenzwert 52 entspricht hierbei dem zum Kreisbogen jeder der Lamellen 34 korrespondierenden Winkel. In einem zweiten Arbeitsschritt 66 wird eine Winkelposition α des Rotors 24 bezüglich des Stators 22 bestimmt. Hierfür wird ein Sensorsignal 68 des Positionssensors 44 herangezogen, dessen zeitlicher Verlauf in Fig.5b dargestellt ist. Das Sensorsignal 68 tritt stets auf, wenn eine Kommutierung stattfindet, also wenn ein Rippel 60 in dem Drehmoment M vorhanden ist. Nach Bestimmung der Winkelposition α wird der in einem dritten Arbeitsschritt 70 der Zeitpunkt des zu erwartenden nächsten Rippels 60 bestimmt, indem zu dem Zeitpunkt des Sensorsignals 68 der Quotient aus dem Referenzwert 52 und der Drehzahl n addiert wird.

In einem vierten Arbeitsschritt 72 wird zu diesem Zeitpunkt der Motorstrom I erhöht. Hierfür wird die an den beiden Bürsten 38 anliegende elektrische Spannung mittels der Motorelektronik 16 kurzzeitig erhöht. Ausgehend von der ersten Winkelpositionsbestimmung werden auch sämtliche in Zukunft zu erwartende Rippel 60 mittels Anpassung des Motorstroms I kompensiert. Mit anderen Worten wird der dritte Arbeitsschritt 70 sowie der vierte Arbeitsschritt 72 im Wesentlichen so lange wiederholt, bis der Taster 18 zur Beendigung der Verstellbewegung der Fensterscheibe 4 betätigt wird. Alternativ hierzu wird ausgehend von jedem der Sensorsignale 68 der jeweils nächste Rippel 60 bestimmt. Mit anderen Worten werden der zweite Arbeitsschritt 66, der dritte Arbeitsschritt 70 sowie der vierte Arbeitsschritt 72 im Wesentlichen kontinuierlich wiederholt.

Infolgedessen ergibt sich ein im Wesentlichen konstanter zweiter Motorstromverlauf 74 sowie ein hierzu korrespondierender zweiter Drehmomentverlauf 76, der im Wesentlichen keine Rippel 58,60 aufweist. Mit anderen Worten ist die Amplitude der Rippel 60 auf null verringert. Daher ist auch der sich ergebende zweite Drehzahlverlauf 78 im Wesentlichen konstant, so dass lediglich eine einzige Frequenz von Benutzern des Fensterhebers 2 feststellbar ist.

Sofern der Referenzwert 52 nicht in dem Speicher 50 hinterlegt ist, ist der erste Arbeitsschritt 64 abgewandelt. Hierbei wird sowohl eines der Sensorsignale 68 als auch der hierzu zeitlich nachfolgende Stromrippel 58 erfasst. Die dazwischenliegende Zeitspanne wird mit der korrespondierenden Drehzahl n zur Erstellung des Referenzwerts 52 multipliziert. Hierbei wird der Referenzwert 52 vorzugsweise lediglich bei einer ersten Umdrehung des Rotors 24 ermittelt und in dem als flüchtigen Speicher ausgestalteten Speicher 50 hinterlegt.

In Fig. 4 ist eine alternative Ausführungsform des Verfahrens 54 dargestellt, wobei der dritte Arbeitsschritt 70 und der vierte Arbeitsschritt 72 dem in Fig. 3 gezeigten entsprechen. Dieses Verfahren 54 findet Anwendung, sofern kein Positionssensor 44 vorhanden ist. Die Winkelposition α wird in dem zweiten Arbeitsschritt 66 mittels der Stromrippel 60 selbst bestimmt. Hierbei wird die Zeitspanne zwischen zwei aufeinander folgenden Stromrippel 60 mit der aktuellen Drehzahl n multipliziert, um den Referenzwert 52 zu erstellen. Ausgehend von dem aktuellen Zeitpunkt des letzten erfassten Stromrippels 60 wird der Quotient aus dem Referenzwert 52 und der aktuell gültigen Drehzahl n addiert, um den Zeitpunkt des nächsten Rippels 58 innerhalb des Drehmoments M zu bestimmen, was in dem dritten Arbeitsschritt 70 erfolgt.

Für eine erste Zeitspanne 80 werden sämtliche zu erwartenden Rippel 60 anhand der einmalig bestimmten Winkelposition α bestimmt und der Motorstrom I entsprechend angepasst. Die erste Zeitspanne 80 korrespondiert hierbei beispielsweise zu zehn Umdrehungen des Rotors 24. Innerhalb der ersten Zeitspanne 80 erfolgt somit keine weitere Winkelpositionsbestimmung. Nach Ablauf der ersten Zeitspanne 80 wird in einem fünften Arbeitsschritt 82 für eine zweite Zeitspanne 84 die Anpassung des Motorstroms I ausgesetzt. Infolgedessen treten erneut die Stromrippel 58 auf, die zu den Stromrippel 60 korrespondieren. Innerhalb der zweiten Zeitspanne 84 wird erneut die Winkelposition α mit den vergleichsweise stark ausgeprägten Stromrippeln 60 bestimmt und somit der Referenzwert 52 korrigiert.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebenen Einzelmerkmale auch auf andere Weise miteinander kombinierbar, ohne den Gegenstand der Erfindung zu verlassen.

### Bezugszeichenliste

- 2: Fensterheber
- 4: Fensterscheibe
- 6: Tür
- 8: Verstellantrieb
- 10: Verstellweg
- 12: Elektromotor
- 14: Schneckengetriebe
- 16: Motorelektronik
- 18: Taster
- 20: Permanentmagnet
- 22: Stator
- 24: Rotor
- 26: Rotorwelle
- 28: Elektromagnetenstruktur
- 30: Spule
- 32: Blechpaket
- 34: Kommutatorlamelle
- 36: Kommutator
- 38: Bürste
- 40: Litze
- 42: Ringmagnet
- 44: Positionssensor
- 46: AMR-Sensor
- 48: Leitung
- 50: Speicher
- 52: Referenzwert
- 54: erster Motorstromverlauf
- 56: erster Drehmomentverlauf
- 58: Stromrippel
- 60: Rippel
- 62: erster Drehzahlverlauf
- 64: erster Arbeitsschritt
- 66: zweiter Arbeitsschritt
- 68: Sensorsignal
- 70: dritter Arbeitsschritt
- 72: vierter Arbeitsschritt
- 74: zweiter Motorstromverlauf
- 76: zweiter Drehmomentverlauf
- 78: zweiter Drehzahlverlauf
- 80: erste Zeitspanne
- 82: fünfter Arbeitsschritt
- 84: zweite Zeitspanne

- n: Drehzahl
- t: Zeit
- I: Motorstrom
- M: Drehmoment
- α: Winkelposition

## Patentansprüche

1. Verfahren (54) zum Betrieb eines bürstenbehafteten Kommutatormotors (12) eines Verstellantriebs (8) eines Kraftfahrzeugs, insbesondere Fensterheber (2), mit einem Rotor (24) und mit einem Stator (22), bei dem
- eine Winkelposition (a) des Rotors (24) bezüglich des Stators (22) bestimmt wird, wobei die Winkelposition (a) anhand eines Sensorsignals (68) eines Positionssensors (44) bestimmt wird,
- anhand der Winkelposition (a) ein aufgrund der Kommutierung zu erwartender Rippel (60) des Drehmoments (M) bestimmt wird, wobei als Zeitpunkt des zu erwartenden Rippel (60) der Zeitpunkt des Sensorsignals (68) zuzüglich des Quotienten aus einem Referenzwert (52) und der Drehzahl (n) bestimmt wird, und
- der Motorstrom (I) derart angepasst wird, dass die Amplitude des zu erwartenden Rippels (60) unterhalb eines bestimmten Grenzwerts verbleibt.

2. Verfahren (54) nach Anspruch 1, bei dem als Referenzwert (52) ein zu dem Kreisbogen einer Lamellen (34) eines Kommutators (36) korrespondierender Winkel herangezogen wird.

3. Verfahren (54) nach Anspruch 1 oder 2, bei dem als Bestandteil des Positionssensors (44) ein AMR-Sensor (46) oder ein Hall-Sensor herangezogen wird.

4. Verfahren (54) nach einem der Ansprüche 1 bis 3, bei dem der Referenzwert (52) aus einem nicht flüchtigen Speicher (50) einer Motorelektronik (16) ausgelesen wird.

5. Verfahren (54) nach einem der Ansprüche 1 bis 3, bei dem der Referenzwert (52) anhand eines innerhalb des Motorstroms (I) vorhandenen Stromrippels (58) vor Anpassung des Motorstroms (I) bestimmt wird.

6. Verstellantrieb (8) eines Kraftfahrzeugs, insbesondere Fensterheber, mit einem bürstenbehafteten Kommutatormotor, der angepasst ist, um das Verfahren (54) nach einem der Ansprüche 1 bis 5 durchzuführen.

## Claims

1. Method (54) for operating a commutator motor (12) of an adjustment device (8) of a motor vehicle, in particular a window lifter (2), said commutator motor (12) being equipped with brushes, having a rotor (24) and having a stator (22), in which
- an angle position (a) of the rotor (24) is determined in terms of the stator (22), wherein the angle position (a) is determined by means of a sensor signal (68) of a position sensor (44),
- a ripple (60) of the torsional moment (M), said ripple (60) to be expected because of the commutation, is determined by means of the angle position (a), wherein the time point of the sensor signal (68), in addition to the quotient of a reference value (52) and the rotational frequency (n), is determined as the time point of the ripple (60) to be expected, and
- the motor current (I) is adapted in such a way that the amplitude of the ripple (60) to be expected remains below a determined threshold value.

2. Method (54) according to claim 1, in which an angle corresponding to the arc of a lamella (34) of a commutator (36) is used as the reference value (52).

3. Method (54) according to claim 1 or 2, in which an AMR sensor (46) or a Hall sensor is used as the component of the position sensor (44).

4. Method (54) according to one of claims 1 to 3, in which the reference value (52) is read out from a non-volatile memory (50) of a motor electronics system (16).

5. Method (54) according to one of claims 1 to 3, in which the reference value (52) is determined by means of a current ripple (58) present within the motor current (I) before the adaptation of the motor current (I).

6. Adjustment device (8) of a motor vehicle, in particular window lifter, having a commutator motor that is equipped with brushes and that is adapted to carry out the method (54) according to one of claims 1 to 5.

## Revendications

1. Procédé (54) pour faire fonctionner un moteur à collecteur à balais (12) d'un entraînement de réglage (8) d'un véhicule automobile, en particulier un lève-vitre (2), comportant un rotor (24) et un stator (22), procédé dans lequel
- une position angulaire (a) du rotor (24) par rapport au stator (22) est déterminée, la position angulaire (a) étant déterminée au moyen d'un signal de capteur (68) d'un capteur de position (44),
- une ondulation (60) du couple (M) attendue en raison de la commutation est déterminée à l'aide de la position angulaire (a), l'instant du signal de capteur (68) plus le quotient d'une valeur de référence (52) et de la vitesse de rotation (n) étant déterminé comme l'instant de l'ondulation (60) attendue, et
- le courant moteur (I) est adapté de telle manière que l'amplitude de l'ondulation (60) attendue reste inférieure à une valeur limite donnée.

2. Procédé (54) selon la revendication 1, dans lequel un angle correspondant à l'arc de cercle d'une lamelle (34) d'un collecteur (36) est utilisé comme valeur de référence (52).

3. Procédé (54) selon la revendication 1 ou 2, dans lequel un capteur AMR (46) ou un capteur à effet Hall est utilisé comme constituant du capteur de position (44).

4. Procédé (54) selon l'une des revendications 1 à 3, dans lequel la valeur de référence (52) est lue dans une mémoire non volatile (50) d'une unité électronique de moteur (16).

5. Procédé (54) selon l'une des revendications 1 à 3, dans lequel la valeur de référence (52) est déterminée à l'aide d'une ondulation de courant (58) présente dans le courant moteur (I) avant ajustement du courant moteur (I).

6. Entraînement de réglage (8) d'un véhicule automobile, en particulier lève-vitre, comportant un moteur à collecteur à balais qui est adapté pour la mise en oeuvre du procédé (54) selon l'une des revendications 1 à 5.
